Europäisches Patentamt

European Patent Office

Office européen des brevets

(19)

(11) Veröffentlichungsnummer: **0 089 316**

**A2**

# (12) EUROPÄISCHE PATENTANMELDUNG

(21) Anmeldenummer: 83810102.0

(22) Anmeldetag: 14.03.83

(51) Int. Cl.³: **F 24 J 3/02**

(30) Priorität: 15.03.82 CH 1585/82

(43) Veröffentlichungstag der Anmeldung:
21.09.83 Patentblatt 83/38

(84) Benannte Vertragsstaaten:
AT BE CH DE FR GB IT LI LU NL SE

(71) Anmelder: Elias, Jiri, Dipl.-Ing.
l'Anémone
CH-1803 Chardonne(CH)

(72) Erfinder: Elias, Jiri, Dipl.-Ing.
l'Anémone
CH-1803 Chardonne(CH)

(54) Energieflächenelement zur Abgabe sowie Abnahme der Wärmeenergien.

(57) Das Energieflächenelement ist eine Einrichtung zur Abgabe sowie zur Abnahme der Wärmeenergien, bestehend aus der Wärmeisolation (1), der wärmeleitender Schicht (2), dem Wärmeleiter (3), dem Flächenpanel (4) mit seinen Hohlräumen (5), und im Einsatz als Sonnenkollektor mit der Absorbtionsschicht (7). Die genannte Einrichtung ermöglicht ein energiesparendes Beheizen von Bauten aller Art, sowie die wirtschaftliche Kombination mit Klima- und Lüftungsanlagen, und ist auch als Sonnenkollektor verwendbar.

FIG. 1

EP 0 089 316 A2

Jiri ELIAS, dipl.Masch.Ing.        1803 Chardonne

PATENTANSPRUECHE

1. Energieflächenelement zur Abgabe sowie Abnahme der Wärmeenergien, bestehend aus der Wärmeisolation (1), der wärmeleitender Schicht (2) dem Wärmeleiter (3) und dem Flächenpanel (4), dadurch gekennzeichnet, dass das Flächenelement der Energieabgabe sowie der Energieabnahme dient, wobei das Flächenpanel (4) durchgehende Hohlräume (5) besitzt und eine grosse mechanische Festigkeit, ein geringes Gewicht, eine grosse Gesamtfläche, eine hohe Wärmeleitzahl und eine kleine Wärmeträgheit aufweist, und das Flächenpanel (4) die Luft- und Gasumwälzung durch seine Hohlräume (5), erlaubt.

2. Energieflächenelement nach Patentanspruch 1, dadurch gekennzeichnet, dass das Flächenpanel (4), in der Funktion der Energieabgabe, die Wärmeenergie vom Wärmeleiter (3) mittels der wärmeleitender Schicht (2) abnimmt, und diese Wärmeenergie an den zubeheizenden Raum (6), durch Abstrahlung, abgibt.

3. Energieflächenelement nach Patentanspruch (2), dadurch gekennzeichnet, dass die Wärmeabgabe an den zu beheizenden Raum (6), neben der Abstrahlung, mittels der durch die Hohlräume (5) strömenden Raumluft, verwirklicht wird, wobei die Hohlräume (5) einen runden, ovalen oder mehreckigen Querschnitt haben können.

4. Energieflächenelement nach Patentansprüche 1,2 und 3, dadurch gekennzeichnet, dass die Wärmeenergie, die im Sonnenkollektor oder Wärmeaustauscher erwärmte Luft, dem Flächenpanel (4)via seine Hohlräeme (5) zugeführt wird.

5. Energieflächenelement nach Patentanspruch 1, dadurch gekennzeichnet, dass das Flächenpanel (4), in der Funktion der Energieabnahme als Sonnenkollektor, eine Absorbtionsschicht (7) besitzt, wobei die abgenommene Wärmeenergie, durch Luft oder Gas, über die Hohlräume (5) sowie dem Wärmeleiter (3) abgeführt wird.

6. Energieflächenelement nach Patentanspruch 1, dadurch gekennzeichnet, dass die Wärmeabnahme sowie Wärmeabgabe der Energien, nur durch die Luft, welche die Hohlräume (5) durchströmt, verwirklicht wird, ohne dass beim Energieflächenelement die Teile (2) und (3) eingebaut wurde.

Energieflächenelement

_____

Die Erfindung bezieht sich auf eine Einrichtung, welche einerseits der Energieabgabe und anderseits der Abnahme der Energien dient.

Ferner ermöglicht sie die Kombination mit Klima- und Lüftungsanlagen. Das Energieflächenelement kann man versehen mit einer Absorbtionsschicht, mit welcher es als Sonnenkollektor eingesetzt werden kann.


Gemäss dem bisherigen Stand der Technik kennen wir Einrichtungen zur Wärmeabgabe, zum Beispiel bei den Bodenheizungen mit ihrem Bodenaufbau, welcher sich nachteilig auswirken kann im Vergleich mit den Heizkörperheizungen. Nachteilig ist bei den Fussbodenheizungen die grosse thermische Trägheit und ihre geringe Ueberlastbarkeit.

Die Fussbodenheizung kann beim heutigen Stand der Technik nicht ausreichend auf die raschen Wärmelasten reagieren. Dazu kommen noch die grossen Wärmeverluste an unbeheizte Kellerräume,beziehungsweise zum Erdbereich, bedingt durch den grossen Wärmewiderstand des Unterlagsboden, welcher sich befindet über der Wärmeisolation. Ferner sind Reparaturen bei den beschädigten und defekten Heizschlangen, welche im Unterlagsboden einbetoniert sind, zeitaufwändig und kostspielig.


Der Erfindung wie sie in den Ansprüchen gekennzeichnet ist, liegt die Aufgabe zugrunde, die genannten Nachteile abzubauen und ein Energieflächenelement zu schaffen, dass eine grosse mechanische Festigkeit, ein geringes Gewicht, eine grosse Gesamtfläche, eine hohe Wärmeleitzahl und eine kleine Wärmeträgheit aufweist.

Im folgenden wird die Erfindung anhand des Ausführungsbeispiels näher erläutert:

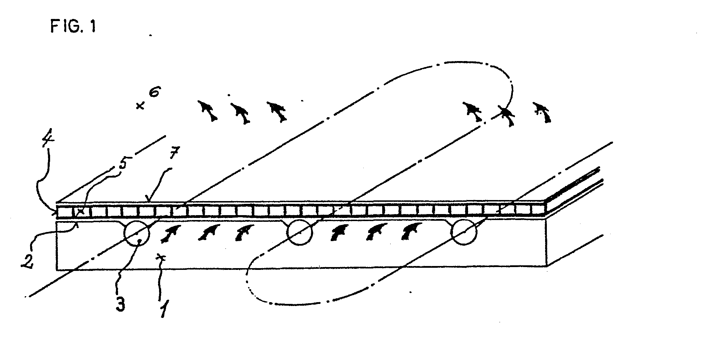

Fig. 1      Schnitt mit dreidimensionaler Darstellung des erfindungsgemässen Energieflächenelementes.

Das in Fig. 1 dargestelltes Energieflächenelement besteht aus der Wärmeisolation 1, der wärmeleitender Schicht 2, dem Wärmeleiter 3 und dem Flächenpanel 4 mit seinen Hohlräumen 5, im Einsatz als Sonnenkollektor besitzt es die Absorbtionsschicht 7. Erfindungsgemäss hat das Energieflächenelement ein Flächenpanel 4, das durchgehende Hohlräume 5 hat, welche einen runden, ovalen, oder mehreckigen Querschnitt haben können, und das eine Luft- oder Gasumwälzung durch seine Hohlräume, ermöglicht. Das Flächenpanel 4 weist ausserdem eine grosse mechanische Festigkeit, ein geringes Gewicht, eine grosse Gesamtfläche, eine hohe Wärmeleitzahl und eine kleine Wärmeträgheit, auf. Selbstverständlich sind auch gewisse Abweichungen von der gezeichneten Ausführung möglich.

Jiri ELIAS dipl. Masch. Ing.

FIG. 1